(19) **Europäisches Patentamt**

**European Patent Office**

**Office européen des brevets**

(11) **EP 1 712 573 A1**

(12) **EUROPEAN PATENT APPLICATION**

(43) Date of publication:
**18.10.2006 Bulletin 2006/42**

(51) Int Cl.:
*C08F 265/06* (2006.01)    *C09J 151/00* (2006.01)

(21) Application number: **06251970.7**

(22) Date of filing: **07.04.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (72) Inventors:<br>• **Hughes, Kathleen Anne**<br>  **Blue Bell, PA 19422 (US)**<br>• **Schultz, Alfred Karl**<br>  **Maple Geln, PA 19002 (US)** |
| (30) Priority: **15.04.2005 US 672134** | (74) Representative: **Kent, Venetia Katherine**<br>**Rohm and Haas (UK) Ltd.**<br>**European Patent Department**<br>**4th Floor, 22 Tudor Street**<br>**London EC4Y 0AY (GB)** |
| (71) Applicant: **ROHM AND HAAS COMPANY**<br>**Philadelphia,**<br>**Pennsylvania 19106-2399 (US)** | |

(54) **Process for preparing aqueous dispersions of multistage emulsion polymers**

(57)    A process for preparing aqueous polymer dispersions is described comprising the steps: (a) polymerizing at least one ethylenically unsaturated monomer having one or more ethylenically unsaturated groups and/or at least one ethylenically unsaturated surfactant monomer by free-radical aqueous emulsion polymerization to provide a first polymer; and (b) further polymerizing, in one or more successive polymerization stages, one or more monomers selected from ethylenically unsaturated monomers and/or ethylenically unsaturated surfactant monomers by free-radical polymerization in aqueous dispersion of the first polymer.

EP 1 712 573 A1

## Description

This invention relates to improved water-based or aqueous adhesives, including pressure sensitive adhesives (PSAs). In particular, this invention is directed to a process for preparing aqueous dispersions of multistage emulsion polymers, including one or more polymerizable surfactants, that have utility as PSAs.

Pressure-sensitive adhesives (PSAs) form a permanent tacky film which at room temperature, even under slight pressure, sticks to a very wide variety of surfaces. Pressure-sensitive adhesives are used to produce self-adhesive products such as self-adhesive labels, tapes and films. Products of this kind are very simple to use and make it possible to work rapidly when bonding. In contrast to contact adhesive compositions, no ventilation times are necessary. Moreover, there is no "open time" within which the adhesive bond must be implemented. The quality of a self-adhesive article depends essentially on whether the internal strength (cohesion) and the sticking of the adhesive film on the surface that is to be bonded (adhesion) are set properly in relation to one another in accordance with the utility.

U.S. Patent 6,262,144 B1 discloses a process for preparing aqueous polymer dispersions which comprises subjecting ethylenically unsaturated monomers to free-radical aqueous emulsion polymerization to prepare an aqueous dispersion of a first polymer having a glass transition temperature $Tg^1$, then dissolving further, comparatively hard monomers in the dispersed particles of the first polymer, and subsequently carrying out free-radical polymerization of the monomers dissolved in the particles. An essential feature of the process is that monomers which are polymerized in a stage i are added to the polymerization vessel such that a significant proportion thereof is able to dissolve, prior to its polymerization, in the polymer particles which are already present in the polymerization vessel, in disperse distribution in the aqueous medium, and is thus polymerized in the form in which it is dissolved in these dispersed polymer particles (ie. after swelling the dispersed polymer particles). In the form of their aqueous dispersions, the polymers prepared from the process can be used as adhesives, especially pressure-sensitive adhesives. It is desirable to provide alternative aqueous dispersions having not only improved properties as compared to the aqueous dispersions described, but having additional properties including, but not limited to, water resistance, water whitening resistance, surfactant migration resistance and reduced edge ooze and flow to impart improved converting, cutting and stripping to the adhesive article.

In the case of pressure-sensitive adhesives, it is not possible to optimize adhesion and cohesion independently of one another. There is a desire for measures which either lift the level of both properties or, at least, maintain one property unchanged while improving the other.

Accordingly, the present invention is to provide a process for preparing aqueous polymer dispersions comprising the steps: (a) polymerizing at least one ethylenically unsaturated monomer having one or more ethylenically unsaturated groups and at least one ethylenically unsaturated surfactant monomer by free-radical aqueous emulsion polymerization to provide a first polymer; and (b) further polymerizing, in one or more successive polymerization stages, one or more monomers selected from ethylenically unsaturated monomers and ethylenically unsaturated surfactant monomers by free-radical polymerization in aqueous dispersion of the first polymer;
wherein the difference in glass transition temperature between the first polymer and a corresponding polymer formed from each successive polymerization stage is greater than or equal to 10° C, the amount of the ethylenically unsaturated monomers polymerized to prepare the first polymer, based on the amount of all of the monomers polymerized in the process, is between 75% by weight and 99.9% by weight, the total amount of the ethylenically unsaturated monomers polymerized in all polymerization stages, based on the total amount of all of the monomers polymerized in the process, is between 0.1% by weight and 25% by weight.

In one embodiment, the present invention also provides a process wherein the ethylenically unsaturated surfactant monomers are added in each stage of the polymerization.

In a separate embodiment, the present invention also provides a process
wherein the ethylenically unsaturated surfactant monomers are added only in the first stage of the polymerization.

In a separate embodiment, the present invention also provides a process
wherein the ethylenically unsaturated surfactant monomers are added in subsequent stages of the polymerization.

The present invention also provides a process wherein the aqueous polymer dispersion prepared is used as a pressure sensitive adhesive.

As used herein, the term "ethylenically unsaturated surfactant monomers" refers to monomers that when added to water reduces the surface tension of water to less than 72 dynes/cm. The ethylenically unsaturated groups of ethylenically unsaturated monomers used in the present invention are polymerized under conditions of emulsion polymerization described herein and are incorporated in aqueous emulsion polymers formed and then subsequently used to prepare adhesives of the invention.

The ethylenically unsaturated surfactant monomers are surface active agents and are especially useful in emulsion polymerization reactions and are generally capable of co-polymerizing with other ethylenically unsaturated monomers which are conventionally employed in emulsion polymerization reactions, and are capable of polymerizing with themselves, or co-polymerization with a partially polymerized polymer.

Suitable ethylenically unsaturated surfactant monomers include, but are not limited to, for example, salts or quaternary nitrogen compounds comprising at least one acid, wherein the acid is a sulfonic acid, a carboxylic acid, or a phosphoric acid, or a mixture thereof, and at least one nitrogenous base, wherein the nitrogenous base contains at least one nitrogen atom and at least on ethylenically unsaturated moiety. Other suitable examples are described in U. S. Pat. Publ. No. 2003/149119.

Other suitable polymerizable surfactant monomers include nonylphenoxy propenyl polyethoxylated sulphate (for example as Hitenol™ from Daiichi Corp); sodium alkyl allyl sulphosuccinate (for example as Trem™ LF-40 from Henkel Corp); ammonium di-(tricyclo(5.2.1.0 2, 6) dec-3-en-(8 or 9)oxyethyl) sulfosuccinate; and ammonium di-(tricyclo (5. 2.1.0 2,6) dee-3-en-(8 or 9) sulfosuccinate. Additionally, the ammonium and metal salts of unsaturated $C_6$ to $C_{30}$ organic acids can be used, alone or in combination with the above surfactants. Examples of these acids are: alpha methyl cinnamic acid, alpha phenyl cinnamic acid, oleic acid, lineolic acid (as described in U.S. Pat. No.5,362,832), rincinoleic acid, the unsaturated fraction of Tall oil rosin and fatty acids, disproportionated rosin acid, soybean oil fatty acids, olive oil fatty acids, sunflower oil fatty acids, linseed oil fatty acids, safflower oil fatty acids, sorbitan mono-oleate, abietic acid, poly(oxyethylene) sorbitol sesquioleate, and Empol 1010 Dimer Acid. Additional suitable polymerizable surfactant monomers also include, for example, maleate derivatives (as described in U. S. Pat. No. 4,246,387), and allyl derivatives of alkyl phenol ethoxylates (as described in Japa. Pat. No. 62-227435). The amount of surfactant used is typically from 0.1% to 6% by weight, based on the total weight of monomer.

According to the process of the present invention, one or more ethylenically unsaturated monomers, including one or more ethylenically unsaturated surfactant monomers are polymerized in successive stages and are added to the polymerization vessel such that a significant proportion of the successively added ethylenically unsaturated monomer is able to dissolve, prior to its polymerization, in the polymer particles which are already present in the polymerization vessel, in disperse distribution in the aqueous medium, and is thus polymerized in the form in which it is dissolved in these dispersed polymer particles (ie. after swelling the dispersed polymer particles).

According to one embodiment of the invention, each polymerization stage the addition of the ethylenically unsaturated monomers to be polymerized in this polymerization stage to the polymerization vessel is made such that at no point up to the end of the addition does the degree of polymerization $U_i$ of the monomers to be polymerized in a stage i and of the monomers already added to the polymerization vessel exceed 50 mol-%. According to a separate embodiment, the degree of polymerization up to the end of the addition is less than or equal to 30 mol-%, or is less than or equal to 20 mol-% or is less than or equal to 10 mol-% or is less than or equal to 5 mol-%.

According to one embodiment, it is advantageous, when adding the monomers to be polymerized in a stage i to the polymerization vessel, substantially to interrupt the polymerization, in other words to carry out the polymerization of the monomers to be polymerized in stage i only after having added the total amount of the monomers to be polymerized in stage i to the polymerization vessel. Here, the total amount of the monomers to be polymerized in stage i can, as always within the context of the novel process, be added to the polymerization vessel either all at once or in portions. As already mentioned, the polymerization can be interrupted by measures such as temperature reduction, addition of polymerization inhibitors (free-radical scavengers such as hydroquinone, for example), consumption of initiator, and the like.

The swelling of the polymer particles already present in disperse distribution in the aqueous medium, in the polymerization vessel, by the monomers to be polymerized in a polymerization stage i is in general made easier in that these monomers are pre-emulsified in the aqueous medium or are added in pure form. Furthermore, it is normally and in accordance with the invention of advantage if the addition, in the case of substantially interrupted polymerization, is made at elevated temperature, for example at from 50 to 95° C or from 60 to 80° C. Elevated temperatures of this kind normally accelerate the desired dissolution and swelling process. The latter is also positively influenced by providing sufficient time. In other words, if necessary, the monomers to be polymerized in a polymerization stage i are added to the polymerization vessel and the contents of the polymerization vessel are left alone with polymerization interrupted, preferably with stirring and at elevated temperature, for a prolonged period (from several minutes through several hours up to several days). Such a measure is particularly beneficial in many cases when the polymer 1 includes, in copolymerized form, monomers having two non-conjugated ethylenically unsaturated groups. The latter crosslink the polymer chains present in a polymer particle, thereby making the desired swelling more difficult.

In accordance with the invention, therefore, it is generally advantageous if the total amount of the monomers polymerized to prepare the polymer 1, apart from monomers having two conjugated ethylenically unsaturated groups, does not embrace more than 2% by weight of monomers having more than one ethylenically unsaturated group. It is normally of advantage in accordance with the invention for the polymer 1 to contain in copolymerized form no such cross-linking monomers whatsoever.

Although monomers, such as butadiene, that have two conjugated ethylenically unsaturated groups normally induce almost no pronounced cross-linking within a free-radical aqueous emulsion polymerization (the reactivity of the second ethylenically unsaturated group is normally lowered), it is advantageous in accordance with the invention if the polymer 1 contains in copolymerized form no monomers having two conjugated ethylenically unsaturated groups. The same applies to the polymerization stages i.

It is also preferred if the monomers polymerized in the polymerization stages i comprise no monomers having more than one non-conjugated, ethylenically unsaturated group; in other words, these monomers preferably comprise no cross-linking agent.

In the process, the preparation of the first polymer is followed by only one polymerization stage i. In that case, some of the ethylenically unsaturated surfactant monomers to be polymerized in the one polymerization stage i may already have been added to the polymerization vessel as part of the preparation of the first polymer. This is the case, for example, when the free-radical aqueous emulsion polymerization to prepare the first polymer is deliberately broken off before the ethylenically unsaturated monomers added to the polymerization vessel have been incorporated completely by polymerization. The remaining ethylenically unsaturated monomers then form part of the subsequent polymerization stage i (a corresponding procedure can also be followed in the case of two or more polymerization stages i).

The term glass transition temperature as used in this document refers to the glass transition temperature determined by the DSC technique (differential scanning calorimetry, 20° C./min, midpoint; cf. ASTM D 3418-82).

According to one embodiment of the invention, $Tg^1$ is from -60° C to +110 °C, including from -50° C. to +50° C., or from -50° C to +20° C., or from -50° C. to 0° C or from -40 °C to -20° C.

The $Tg^1$ of polymers used as pressure-sensitive adhesives is in general in the range from -70° C to 20° C, including from -60° C to 0° C., or from -55° C. to -20° C or from -50° C. to -20° C.

With a given $Tg^i$ for the i-th polymerization stage, a monomer composition to be polymerized in the i-th polymerization stage can be assembled in a simple manner using the Fox equation. According to Fox (T. G. Fox, Bull. Am. Phys. Soc. (Ser. II) 1, 123 (1956) and Ullmanns Encyklopadie der technischen Chemie, Verlag Chemie, Weinheim, 1980, Vol. 19, 4th edition, p. 18), it holds in good approximation for the high-molecular limit value of the glass transition temperature of random copolymers that

$$1/Tg \quad = \quad X^1/Tg^1+ \quad X^2/Tg^2+ \quad \ldots X^n/Tg^n$$

where $X^1$, $X^2$, ..., $X^n$ are the mass fractions of the monomers 1, 2, ..., n and $Tg^1$, $Tg^2$, ... , $Tg^n$ are the high-molecular limit values of the glass transition temperatures of homopolymers composed in each case of only one of the monomers 1, 2, ... or n, in degrees Kelvin.

The high-molecular limit values of the glass transition temperatures for the homopolymers are known for the majority of monomers and are listed, for example, in Ullmann's Encyclopedia of Industrial Chemistry, VCH Weinheim, 1992, fifth edition, Vol. A21, p. 169. Other sources of homopolymer glass transition temperatures are J. Brandrup, E. H. Immergut, Polymer Handbook 1st Ed. J. Wiley, New York 1966, 2.sup.nd Ed. J. Wiley, New York 1975, and 3rd Ed. J. Wiley, New York 1989, for example.

Experimentally, random copolymerization of a monomer composition i in a polymerization stage i can essentially be carried out by polymerizing a corresponding monomer mixture by the method of free-radical aqueous emulsion polymerization in the feed technique. In other words, the monomer mixture is pre-emulsihed in the aqueous phase and, with the addition of initiators, the mixture is run into the polymerization vessel at the rate at which it is consumed in such a way that the degree of polymerization of the monomers already present in the polymerization vessel is always greater than or equal to 95 mol-%. Suitable initiators are preferably sodium peroxodisulfate, and the polymerization is normally carried out at from 60 to 90° C. Dispersants which can be employed are the substances recommended in this document for preparing the novel aqueous polymer dispersions. The molecular weight can be regulated in a familiar manner by using substances which have this effect (for example mercaptans) and/or by the amount of initiator used. In the absence of molecular weight regulators and with the use of from 0.1 to 2% by weight of polymerization initiator, based on the amount of monomers, an aqueous polymer dispersion can be obtained whose glass transition temperature corresponds to the high-molecular limit $Tg^i$.

In accordance with the invention, for each $Tg^i$ the difference $Tg^i$ -$Tg^1$ is at least 10° C. Exemplary embodiments of the novel process are those wherein, for each polymerization stage i, the difference $Tg^i$ -$Tg^1$ is from 10° C to 220° C, including from 30° C to 200° C, or from 50 °C to 180° C, or from 80° C to 150° C, or from 100° C to 130° C.

Where the difference $Tg^i$ -$Tg^1$ is comparatively small for all polymerization stages i, the novel process brings about, in particular, a pronounced increase in the elongation at break. Where the difference $Tg^i$ -$Tg^1$ is comparatively high for all polymerization stages i, the novel process brings about, in particular, a pronounced increase in the tear strength. According to one embodiment of the invention, if the optimal differences $Tg^i$ -$Tg^1$ are from 60 to 190° C. For the use as pressure sensitive adhesives, $Tg^i$ -$Tg^1$ of from 60 to 160° C is optimal.

What has been said above is particularly appropriate when, in the novel process, the preparation of the polymer 1 is followed by only one polymerization stage i.

The weight-average diameter $d_w$ of the polymer 1 present in disperse distribution in the aqueous medium in accordance with the invention extends over a wide range. For example, $d_w$ is from 50 nm to 2000 nm, including from 100 nm to 1000 nm or from 200 nm to 500 nm.

Similarly, the number-average molecular weight $M_n$ of the first polymer covers a wide range of values. For example, $M_n$ can be from 5000 or 50,000 to $5 \times 10^6$, including from 100,000 to $3 \times 10^6$ or from 250,000 to $1 \times 10^6$. To prepare the first polymer it is of course possible to use molecular weight regulators such as mercaptans (mercaptoethanol, tert-dodecyl mercaptan etc.) and/or halogenated hydrocarbons (e.g. methylene chloride, carbon tetrachloride, chloroform, bromoform, dichloroethane, trichloroethane) and/or C1 to C4 alcohols such as methanol and allyl alcohol. The same applies to the polymerization stages i. Preferably, both the first polymer and the polymerization stages i are realized without the use of molecular weight regulators.

In accordance with the invention, the total amount of the monomers polymerized in all polymerization stages i, based on the amount of all of the monomers polymerized in the course of the novel process, is from 0.1% by weight to <25% by weight, including from 0.1 to less than or equal to 10% by weight. In many cases a correspondingly based total amount of monomers polymerized in all polymerization stages i of from 0.5% by weight to 8% by weight is advantageous, or from 1% by weight to 6% by weight or from 2% by weight to 6% by weight.

Monomers suitable for preparing the first polymer and for polymerization in the polymerization stages i are, in accordance with the invention and in principle, all monoethylenically unsaturated monomers which can be polymerized by a free-radical mechanism known per se. These are monomers such as styrene, alpha-methylstyrene, o-chlorostyrene, alpha-phenylstyrene or vinyltoluenes, esters of vinyl alcohol and C1-C18 monocarboxylic acids, such as vinyl acetate, propionate, n-butyrate, laurate and stearate, esters of allyl alcohol and C1 -C18 monocarboxylic acids, such as allyl acetate, propionate, n-butyrate, laurate and stearate, esters of preferably C3-C6 alpha, beta-monoethylenically unsaturated mono- and dicarboxylic acids, especially acrylic, methacrylic, maleic, fumaric and itaconic acid, with in general C1-C12, including C1-C8 and C1-C4 alkanols, such as methyl acrylate and methacrylate, ethyl acrylate and methacrylate, n-butyl acrylate and methacrylate, isobutyl acrylate-and methacrylate, tertbutyl acrylate and methacrylate, hexyl acrylate and methacrylate, n-octyl acrylate and methacrylate, 2-ethylhexyl acrylate and methacrylate, decyl acrylate, lauryl acrylate, stearyl acrylate, isobornyl acrylate and methacrylate, norbornyl acrylate, 4-tertbutylcyclohexyl acrylate and methacrylate, 3,3,5-trimethylcyclohexyl acrylate and methacrylate, dimethyl maleate or n-butyl maleate, and also nitriles of alpha, beta-monoethylenically unsaturated carboxylic acids, such as acrylonitrile and methacrylonitrile. Examples of suitable C4-8 conjugated dienes are 1,3-butadiene and isoprene. Also of importance are commercially available monomers VEOVA™ 9-11 (VEOVA is a tradename of Shell and stands for vinyl esters [of carboxylic acids, which are also known as Versatic™ X acids] of the formula

$$R_1R_2R_3C\text{-}C(O)\text{-}O\text{-}CH{=}CH_2$$

in which $R_1$, $R_2$ and $R_3$ are alkyls whose total number of carbons ($R_1 + R_2 + R_3$) is equal to X minus 2).

The abovementioned monomers generally account for the majority of the first polymer and of the subsequent polymerization stages i. In general, the majority accounts for more than 75% by weight of the first polymer or of the respective polymerization stage i. Monomers which when polymerized alone usually give homopolymers of increased solubility in water are normally present, both in the first polymer and in the polymerization stages i, only in modifying amounts, normally less than 25% by weight, including from 0.1 to 10% by weight, or from 0.1 to 5% by weight.

Examples of such monomers are C3-C6 alpha, beta-monoethylenically unsaturated mono- and dicarboxylic acids and their amides, for example acrylic, methacrylic, maleic, fumaric and itaconic acid, acrylamide and methacrylamide, and also vinylsulfonic acid, acrylamidopropanesulfonic acid and water-soluble salts of the abovementioned acids. Other examples of such monomers are monoesters of dihydric alcohols with C3-C6 alpha, beta-monoethylenically unsaturated carboxylic acids, such as hydroxyethyl acrylate, n-hydroxypropyl acrylate, n-hydroxybutyl acrylate and the corresponding methacrylates. Normally, copolymerization of the abovementioned monomers brings about increased stability of the disperse distribution of the resulting polymer in the aqueous medium.

The polymerization stages i preferably embrace none of the abovementioned monomers having increased solubility in water. Rather, the monomers to be polymerized in the polymerization stages i are advantageously those having particularly low solubility in water. In general, the monomers polymerized in the polymerization stages i are those whose molal solubility in water (at 1 atm and 25° C) is less than or equal to the corresponding solubility of methyl methacrylate in water.

In accordance with the invention the first polymer can also contain in copolymerized form monomers containing 2 or more nonconjugated ethylenically unsaturated groups, for example the diesters of dihydric alcohols with alpha, beta-monoethylenically unsaturated monocarboxylic acids. Preferred diunsaturated diesters are those of acrylic and of methacrylic acids. Examples which may be given are alkylene glycol diacrylates and dimethacrylates, such as ethylene glycol diacrylate, 1,3-butylene glycol diacrylate, 1,4-butylene glycol diacrylate, propylene glycol diacrylate, 1,6-hexanediol diacrylate, dipropylene glycol diacrylate, tripropylene glycol diacrylate and trimethylolpropane triacrylate. As cross-linking constituents of the polymer 1, monomers such as divinylbenzene, vinyl methacrylate, vinyl acrylate, allyl methacrylate, allyl acrylate, diallyl maleate, diallyl fumarate, methylenebisacrylamide, cyclopentadienyl acrylate and triallyl cyanurate are also suitable.

In many cases it is advantageous if the polymer 1 and/or one or more of the polymerization stages i possess in minor amounts, generally in amounts of from 0.5 to 5% by weight, those monomers which bring about cross-linking in the course of film formation. Examples that may be mentioned are carbonyl-containing monomers such as acrolein, methacrolein, diacetoneacrylamide and methacrylamide, and also vinyl acetoacetate. The abovementioned monomers bring about post-cross-linking, for example, when the aqueous polymer dispersion contains at the same time an appropriate amount of an added polyamine compound. Particularly suitable such compounds are the dihydrazides of C2-C10 aliphatic dicarboxylic acids. Examples are the dihydrazides of oxalic, malonic, succinic, glutaric, adipic and sebacic acids.

One example of another monomer which brings about post-cross-linking is 2-acetoacetoxyethyl methacrylate (alone or in combination with polyamines or polyaldehydes such as glyoxal). Also suitable for post-cross-linking are those polymer units which have hydrolyzable Si-C bonds. Examples which may be mentioned are the copolymerizable monomers methacryloyloxypropyltrimethoxysilane and vinyltrimethoxysilane. Other suitable polymer units of corresponding type are given in German Pat. No. DE-A 43 41 260. If the disperse polymer particles have carboxyl groups, then post-cross-linking can also be brought about by adding metal salts containing polyvalent cations (e.g. Mg, Ca, Zn or Zr salts). Also suitable for the purpose of post-cross-linking are monomers containing epoxy and/or N-alkylol groups, for example glycidyl acrylate, N-methylolacrylamide and N-methylolmethacrylamide. Post-cross-linking can also be achieved by copolymerization of small amounts of unsaturated benzophenone derivatives or acetophenone derivatives, and subsequent photoinitiation. As an alternative, appropriate saturated benzophenone derivatives or acetophenone derivatives can also be stirred into the aqueous polymer dispersions obtainable in accordance with the invention.

The invention does not require the use of post-cross-linking constituents in order to obtain the desired mechanical property profile of the dispersion polymer films. Where the novel process comprises systems which bring about post-cross-linking, then the glass transition temperatures $Tg^1$ and $Tg^i$ refer to the glass transition temperatures that are found when these cross-linking constituents, present only in minor quantities, are excluded.

In addition, the first polymer and/or the polymerization stages i may include minor amounts, generally from 0.1 to 5% by weight, of adhesion monomers (e.g. nitrogen-containing monomers), in order to increase the adhesion of the film of the resulting aqueous polymer dispersion to numerous materials such as wood, metal, minerals, paper, textiles and plastic, but in particular to old coatings based on drying oils and/or alkyd resins, and to reduce the sensitivity of this adhesion to the effects of moisture and wetness (increased wet adhesion).

Suitable nitrogen-containing adhesion monomers include free-radically polymerizable monomers having at least one amino, ureido or N-heterocyclic group. A large number of such suitable adhesion monomers is given in patents EP-B 421 185, in EP-B 379 892 on page 3, in EP-A 609 756 on page 2, in DE-A 43 34 178 and in DE-A 39 02 067 on pages 3/4.

Examples which may,, be mentioned are arminoethyl acrylate and methacrylate, dimethylaminoethyl acrylate and methacrylate, diethylaminoethyl acrylate and methacrylate, dimethylaminopropyl acrylate and methacrylate, 3-dimethylamino-2,2-dimethylpropyl acrylate and methacrylate, 2-N-morpholinoethyl acrylate and methacrylate, 2-N-piperidinoethyl acrylate and methacrylate, N-(3-dimethylaminopropyl)acrylamide and -methacrylamide, N-dimethylaminoethylacrylamide and -methacrylamide, N-diethylaminoethylacrylamide and -methacrylamide, N-(4-morpholinomethyl) acrylamide and -methacrylamide, vinylimidazole and also monoethylenically unsaturated derivatives of ethyleneurea, such as N-(2-acryloyloxyethyl)ethyleneurea, N-(.beta.-acrylamidoethyl)ethyleneurea, N-2-(allylcarbamato)aminoethylimidazolidinone, N-(3-allyloxy-2-hydroxypropyl)aminoethylethyleneurea, N-vinylethyleneurea, N-vinyloxyethyleneurea, N-methacryloyloxyacetoxyethylethyleneurea, N-(acrylamidoethylene)ethyleneurea, N-(methacrylamidoethylene)-ethyleneurea, 1-(2-methacryloyloxyethyl)imidazolin-2-one and N-(methacrylamidoethyl)ethyleneurea. Further suitable ureido monomers are given in a review article by R. W. Kreis, A. M. Sherman, "Developments in Ureido Functional Monomer for Promoting Wet Adhesion in Latex Paints", Water-Borne and Higher Solids Coating Symposium, from Feb. 3 to 5, 1988, New Orleans, La.

The novel process is enhanced if the monomers used to construct the polymer 1 and the monomers that are polymerized in the polymerization stages i are chemically similar. In other words, if the first polymer is composed predominantly of alkyl esters of acrylic and methacrylic acid or of a mixture thereof with styrene and/or acrlyonitrile, it is advantageous if in the polymerization stages i as well, predominantly, alkyl esters of acrylic and methacrylic acid are copolymerized, either alone or in a mixture with styrene and/or acrylonitrile. If, on the other hand, the first polymer is polymerized predominantly from vinyl esters or a mixture thereof with ethylene, it is advantageous if predominantly vinyl esters or a mixture thereof with ethylene are polymerized in the polymerization stages i as well. Where the first polymer consists predominantly of butadiene or of a mixture thereof with acrylonitrile and/or styrene, it is advantageous if acrylonitrile and/or styrene also form the principal constituents of the polymerization stages i. In other words, in the context of the novel procedure, at least 75% by weight of the composition of the first polymer can be accounted for only by esters of acrylic and/or methacrylic acid with C1 to C8-alkanols or by a mixture thereof with styrene and/or acrylonitrile. Also conceivable, however, is a composition of which at least 75% is accounted for by vinyl esters and/or ethylene.

Accordingly, the novel process can be employed in cases where from 90 (including from 95) to 100% by weight of the composition of polymers 1, in free-radically polymerized form, is accounted for by esters of acrylic and/or methacrylic acid with C1 - to C8 -alkanols and from 0 to 10 (preferably to 5) % by weight by C3 -C6 alpha, beta-monoethylenically unsaturated carboxylic acids, their amides and/or alkali metal salts.

However, it can also be employed in the case where from 95 to 100% by weight of the composition of first polymers, in free-radically polymerized form, is accounted for by esters of acrylic and/or methacrylic acid with C1 -C8 -alkanols and styrene, and from 0 to 5% by weight by C3 -C6 alpha, beta-monoethylenically unsaturated carboxylic acids, their amides and/or alkali metal salts.

The monomers for the construction of the first polymer are selected from the group consisting of ethyl acrylate, methyl methacrylate, n-butyl acrylate, 2-ethylhexyl acrylate, n-butyl methacrylate, acrylic acid, methacrylic acid, acrylamide, methacrylamide, itaconic acid, styrene, acrylonitrile, acrylamidopropanesulfonic acid and vinylsulfonic acid, and, particularly preferably, from the group consisting of n-butyl acrylate, methyl methacrylate, 2-ethylhexyl acrylate, n-butyl methacrylate, acrylic acid, methacrylic acid, acrylamide, methacrylamide and itaconic acid.

In all of the abovementioned cases, isobutyl methacrylate, n-butyl methacrylat, tert-butyl methacrylate, isobornyl acrylate, isobornyl methacrylate, 4-tert-butylcyclohexyl acrylate, 4-tert-butylcyclohexyl methacrylate, 3,3,5-trimethylcyclohexyl acrylate, 3,3,5-trimethylcyclohexyl methacrylate, acrylonitrile, styrene, alpha-phenylstyrene, alpha-methylstyrene, methyl methacrylate and mixtures of the abovementioned monomers constitute the monomers which are preferably polymerized in the polymerization stages i. This statement also applies in the case of other first polymers.

To prepare polymer dispersions which can be used as pressure-sensitive adhesives use is made, for the first polymer, preferably of at least one monomer whose homopolymer has a Tg < 0° C and is selected from esters of acrylic acid and methacrylic acid with an alkanol having at least 4 carbons, especially n-butyl acrylate, isobutyl acrylate, hexyl acrylate, n-octyl acrylate, 2-ethylhexyl acrylate, 2-ethylhexyl methacrylate, decyl acrylate, lauryl acrylate, stearyl acrylate, isobornyl acrylate and other monomers having homopolymer Tgs < 0° C. Particular preference is given to n-butyl acrylate and/or 2-ethylhexyl acrylate. These monomers form the main fraction, that is they are employed in general in amounts of from 70 to 100% by weight, in particular from 80 to 100% by weight, based on the overall weight of the monomers used to prepare the polymer 1. The polymer 1 can, consequently, be composed of up to 30% by weight, in particular up to 20% by weight, of comonomers having a Tg > 0° C. These are preferably selected from styrene, alpha-methylstyrene, o-chlorostyrene, alpha-phenylstyrene, vinylsulfonic acid, acrylamidopropanesulfonic acid, acrylonitrile, methacrylonitrile, acrylic acid, methacrylic acid, acrylamide, methyl acrylate, methyl methacrylate, ethyl acrylate, tert-butyl acrylate, tert-butyl methacrylate, vinyl acetate, vinyl propionate, hydroxyethyl acrylate, hydroxypropyl acrylate, n-butyl methacrylate and methacrylamide, particular preference being given to (meth)acrylic acid and the amides thereof. What has been said above applies to the monomers polymerized in the stages i, in other words they are subject to no specific restriction.

In accordance with the invention, the first polymer is prepared by the method of free-radical aqueous emulsion polymerization, ie. in the presence of free-radical polymerization initiator, directly in the aqueous medium, without requiring a dispersant. The ethylenically unsaturated surfactant monomer acts as a dispersant in the aqueous medium.

The initiation of the free-radical polymerization to prepare the first polymer is accomplished by all free-radical initiators which are capable of triggering a free-radical aqueous emulsion polymerization. They can be peroxides, for example $H_2O_2$, peroxodisulfuric acid and/or salts thereof, for example alkali metal or ammonium peroxodisulfate, and also azo compounds, such as azobisisobutyronitrile or 4,4'-azobiscyanovaleric acid.

Initiation of the free-radical aqueous emulsion polymerization to prepare the first polymer at comparatively low temperatures is made possible by combined initiator systems, which are composed of at least one organic and/or inorganic reducing agent and of at least one peroxide and/or hydroperoxide, examples being tert-butyl hydroperoxide and the sodium metal salt of hydroxymethanesulfinic acid, or hydrogen peroxide and ascorbic acid. What has been said above applies in particular to combined systems which additionally comprise a small amount of a metal compound which is soluble in the polymerization medium and whose metal component can exist in two or more valency states (in many cases in complexed form, in order to prevent precipitation), an example being ascorbic acid/iron(II) sulfate/hydrogen peroxide, it being possible for the ascorbic acid to be replaced, for example, by the sodium metal salt of hydroxymethanesulfinic acid, sodium sulfite or sodium hydrogen sulfite, and the hydrogen peroxide by, for example, alkali metal peroxodisulfate and/or ammonium peroxodisulfate. Instead of a water-soluble iron(II) salt it is also possible to use a V salt or a combination of water-soluble Fe/V salts. In general, the amount of free-radical initiator system used to prepare the first polymer, based on the amount of the monomers to be polymerized, is from 0.1 to 2% by weight.

In the context of the preparation of the first polymer, the temperature and pressure of polymerization are of relatively minor importance. Polymerization is generally carried out at from 0 to 100° C., including from 20° to 100° C., or from 50 to 95° C., or from 60 to 90° C. In order to obtain particularly long-chain first polymers polymerization will expediently be carried out at from 40 to 70° C. The use of sub- or superatmospheric pressure is possible, and so the polymerization temperature may exceed 100° C. and can be up to 130° C or more. Highly volatile monomers such as ethylene or butadiene are preferably polymerized under superatmospheric pressure. To regulate the pH of the polymerization medium, it is possible to add buffers, such as $NaHCO_3$, $Na_2CO_3$, Na-acetate or $Na_2P_2O_5$, during the free-radical aqueous emulsion polymerization to prepare the first polymer.

To improve the reproducibility and establishment of defined particle diameters it is possible, in the context of the preparation of the first polymer, to decouple the polymer particle formation phase and the polymer particle growth phase from one another in a manner known per se to the skilled worker by charging to the polymerization vessel a defined amount of a preformed aqueous polymer dispersion (a seed latex) or pre-forming such a dispersion in situ in said vessel. The amount of dispersant added in the subsequent course of the free-radical aqueous emulsion polymerization is then in general calculated so as not to exceed the critical micelle concentration and so as largely to avoid the formation of new polymer particles. If a broad distribution of the diameters of the particles of the first polymer is desired, the seed latex will generally be added to the polymerization vessel, in a manner known per se, during the free-radical aqueous emulsion polymerization. Like free-radical polymerization processes in general, both the free-radical aqueous emulsion polymerization to prepare the first polymer and each polymerization stage i can be carried out under an inert gas atmosphere (eg. $N_2$, Ar) or under an oxygen-containing atmosphere (eg. air).

The free-radical aqueous emulsion polymerization to prepare an aqueous dispersion of a first polymer can with particular simplicity be carried out as follows. The monomers to be polymerized are emulsified in the aqueous medium, and the free-radical polymerization initiator is dissolved in water. Water and, if desired, a small amount of alpha, beta-monoethylenically unsaturated carboxylic acid are charged to the polymerization vessel, and this initial charge is heated to the polymerization temperature. Then part of the aqueous monomer emulsion and part of the aqueous initiator solution are added in one go to the initial charge, which is then polymerized. Subsequently, while maintaining the polymerization, the remainder of the aqueous monomer emulsion and the remainder of the aqueous initiator solution are supplied continuously to the polymerization vessel, preferably with substantial synchronicity. After the end of the supply of initiator and monomer, the polymerization mixture will expediently be left alone for some time, with stirring and while maintaining the polymerization temperature. To conduct the subsequent polymerization stages i, the reaction mixture will then expediently first of all be cooled. The monomers to be polymerized in the stage i will then be added to the polymerization vessel, preferably on their own and all at once. The emulsifier contents of the aqueous dispersion of the first polymer here will advantageously be such that the aqueous dispersion medium contains essentially no emulsifier micelles. The reactor contents, which advantageously would have been cooled, will generally then expediently be left alone for a certain period, with stirring, in order to promote swelling. Subsequently, fresh free-radical polymerization initiator will normally be added, and the batch will then be heated to the polymerization temperature and polymerized as desired. If required, further polymerization stages i can be appended correspondingly.

Free-radical polymerization initiators which can be used to initiate the polymerization stages i are in principle all those which have already been mentioned in connection with the preparation of the dispersion of the first polymer. Preference, however, is given to employing those free-radical initiator systems that comprise organic peroxides or organic hydroperoxides, especially redox initiator systems comprising such organic peroxides and/or hydroperoxides. Free-radical initiator systems comprising tert-butyl hydroperoxide and cumene hydroperoxide are particularly suitable. However, free-radical initiator systems comprising pinane hydroperoxide, p-menthane hydroperoxide, diisopropylphenyl hydroperoxide, dibenzoyl peroxide, dilauryl peroxide and diacetyl peroxide are also suitable. Examples of suitable reductive partners in such systems are alkali metal sulfites, ascorbic acid, acetone bisulfite, and the alkali metal salts of hydroxymethanesulfinic acid. Based on the monomers to be polymerized in a polymerization stage i, from 0.1 to 2% by weight of free-radical polymerization initiator will generally be added. It is of course also possible, in a less preferred embodiment of the present invention, to add to the polymerization vessel the monomers that are to be polymerized in a polymerization stage i in a form in which they are pre-emulsified in an aqueous medium. Dispersants which can be used in this context are all those already recommended for preparing the aqueous dispersion of the polymer 1. In view of the preferred use of organic redox initiator systems in the polymerization stages i, the associated polymerization temperature will normally be below 80° C. (in most cases less than or equal to 40° C. to greater than or equal to 80° C.). As far as the polymerization pressure is concerned, what was said in relation to the preparation of the first polymer applies here too.

Films of the aqueous polymer dispersions (pigmented and/or filled, or not pigmented and not filled) that result in accordance with the invention have not only the advantages already described but also good flexibility, reduced surface tack and satisfactory hardness. They are suitable, inter alia, as binders for coatings on leather and on hydrophobic substrates, for example on flat roofs which for reasons, for instance, of heat insulation are coated, for example, with polyurethane-based compositions. By employing one of the known spray-drying techniques it is possible to convert the aqueous polymer dispersions that are obtainable in accordance with the invention to polymer powders that can be redispersed in an aqueous medium. Converted to this dry form, the aqueous polymer dispersions obtainable in accordance with the invention, can be transported at favorable cost before being converted back to the aqueous dispersion form at the site of use. In addition, the polymer powders thus obtainable can be used to produce market-oriented dry plasters and to produce polymer-modified binding mineral building materials, such as dry mortars, especially these based on cement. The polymer systems obtainable in accordance with the invention are also suitable as adhesives, as binders for paper coating slips and as binders for non-wovens. In particular, they are suitable as already mentioned for crack-bridging coating compositions (for example paints).

Coating compositions of this kind generally contain from 40 to 95% by weight, including from 60 to 90% by weight and from 65 to 85% by weight of nonvolatile constituents. Based on their total amount, from about 10 to 99.5% by weight, including from 10 to 50% by weight and from 20 to 40% by weight of these constituents are accounted for by the solids present in the polymeric binder, from 0 to 60% by weight, including from 20 to 60% by weight and from 30 to 55% by weight by fillers, from 0 to 60% by weight, including from 0 to 20% by weight by pigments, and from 0.5 to 25% by weight, including from 1 to 10% by weight, by auxiliaries.

Examples of suitable fillers are alumosilicates, silicates, alkaline earth metal carbonates, preferably calcium carbonate in the form of calcite or chalk, dolomite, and also aluminum silicates or magnesium silicates such as talc.

An example of a typical pigment is titanium dioxide, preferably in the rutile form. However, the coating compositions--especially when used for decorative purposes--may also include colored pigments, examples being iron oxides.

Customary auxiliaries include wetting agents, such as sodium or potassium polyphosphates, polyacrylic acids, their alkali metal salts, polyvinyl alcohols, etc. In addition these coating compositions generally contain viscosity modifiers such as cellulose ethers, an example being hydroxyethylcellulose. In addition, the coating compositions can have added to them dispersants, antifoams, preservatives, hydrophobicizing agents, biocides, dyes, fibers or other constituents. In order to establish the film-forming properties of the binder polymers, the coating compositions may also include plasticizers.

The polymer present in the aqueous polymer dispersions that are obtainable in accordance with the invention can of course also be isolated by coagulation, which can be carried out in a manner known per se, and this polymer can be used, for example, to modify engineering plastics.

The aqueous polymer dispersions obtainable in accordance with the invention can also be used to modify other aqueous polymer dispersions. This can be done, simply, bAy adding them to the other aqueous polymer dispersions. An alternative, however, is to use them as a seed dispersion for preparing a different aqueous polymer dispersion.

In addition, the novel polymers can be used as adhesives, especially pressure-sensitive adhesives. They are particularly suitable as pressure-sensitive adhesives.

For this purpose the polymers are preferably used in the form of their aqueous dispersion.

In the case of utility as pressure-sensitive adhesive, a tackifier, in other words a resin which provides tack, can be added to the polymers or to the aqueous dispersions of the polymers. Tackifiers are known, for example, from Adhesive Age, July 1987, page 19-23 or Polym. Mater. Sci. Eng. 61 (1989), page 588-592.

Examples of tackifiers are natural resins, such as rosins and their derivatives produced by disproportionation or isomerization, polymerization, dimerization and/or hydrogenation. They can be present in their salt form (for example with mono- or polyvalent counterions (cations)) or, preferably, in their esterified form. Alcohols used for the esterification-can be monohydric or polyhydric. Examples are methanol, ethanediol, diethylene glycol, triethylene glycol, 1,2,3-propanetriol or pentaerythritol.

Also used, furthermore, as tackifiers are hydrocarbon resins, for example indene-coumarone resins, polyterpene resins, hydrocarbon resins based on unsaturated CH compounds, such as butadiene, pentene, methylbutene, isoprene, piperylene, divinylmethane, pentadiene, cyclopentene, cyclopentadiene, cyclohexadiene, styrene, alpha-methylstyrene or vinyltoluene.

Other compounds increasingly being used as tackifiers are polyacrylates of low molar weight. These polyacrylates preferably have a weight-average molecular weight $M_w$ of below 30,000. At least 60, in particular at least 80% by weight of the polyacrylates preferably consists of C1-C8 alkyl (meth)acrylates.

Preferred tackifiers are natural or chemically modified rosins. Rosins consist primarily of abietic acid or derivatives thereof.

The tackifiers can be added in a simple manner to the novel polymers, preferably to the aqueous dispersions of the polymers. In this case the tackifiers are preferably themselves in the form of an aqueous dispersion.

The amount by weight of the tackifiers is preferably from 5 to 100 parts by weight, including from 10 to 50 parts by weight, based on 100 parts by weight of polymer (solids/solids).

In addition to tackifiers it is also possible to use additives, for example thickeners, antifoams, plasticizers, pigments, wetting agents or fillers, in the case of utility of the polymers as (pressure-sensitive) adhesives.

For use as a (pressure-sensitive) adhesive the novel polymers and aqueous dispersions or aqueous formulations can be applied by customary methods, for example by rolling, knife coating, spreading, etc., to substrates such as paper or polymer films, preferably consisting of polyethylene, polypropylene, which can be coaxially or monoaxially oriented, polyethylene terephthalate, polyvinyl chloride, polystyrene, polyamide or metal. The water can be removed preferably by drying at from 50 to 150° C. For subsequent use, the side of the substrates, for example the labels, that is coated with the (pressure-sensitive) adhesive can be covered with a release paper, for example with a siliconized paper.

When used as adhesives the polymers exhibit water resistance, water whitening resistance and improved cohesion coupled with essentially unchanged adhesion and tackiness.

Examples and Comparison examples:

The following abbreviations are used below:

MMA=methyl methacrylate

nBA=n-butyl acrylate

EHA=2-ethylhexyl acrylate

tBMA=tert-butyl methacrylate

iBMA=iso-butyl methacrylate

nBMA=n-butyl methacrylate

S=styrene

alMS=.alpha.-methylstyrene

BDA2=butanediol diacrylate

AA=acrylic acid

MAA=methacrylic acid

IA=itaconic acid

AM=acrylamide

NaPS=sodium peroxodisulfate

tBHP=tert-butyl hydroperoxide

RC=sodium salt of hydroxymethanesulfinic acid (Rongalit™C)

E1= Hitenol™ BC-10

E2=Polystep™ NMS-7

E3=Trem™ LF-40

E4=Maxemul™ 6112

DS=Dissolvine E-Fe-13™, iron sodium complex of EDTA

AcBS=acetone bisulfite

Comparative Example: An aqueous monomer emulsion was produced from 249 g of water, 14.22 g of a 45% strength by weight aqueous solution of a conventional anionic surfactant, a sodium salt of dodecylphenoxybenzyldisulfonic acid (active substance corresponding to Dowfax™ 2A1), 20 g of a 20% strength by weight aqueous solution of a conventional surfactant, a ethoxylated alkanol (alkyl: C.sub.16-18 ; EO units: 18), 150.4 g of EHA, 488.8 g of nBA, 112.8 g of MMA, 16 g of MAA and 8.0 g of a 50% strength by weight aqueous solution of AM. An aqueous initiator solution was prepared from 2.4 g of sodium peroxodisulfate and 75 g of water. 250 g of water and 1.6 g of IA were charged to a stirred glass polymerization vessel (2 1). The polymerization vessel and the initial charge were flushed with nitrogen and then the charge was heated to 85.degree. C. Subsequently, 21.2 g of the aqueous monomer emulsion were added all at once to the polymerization vessel, followed by 7.7 g of the aqueous initator solution. While maintaining the 85.degree. C., the contents of the reactor were left to polymerize for 30 minutes. Then, while retaining the 85.degree. C., the remainder of the aqueous monomer emulsion (over the course of 3 h) and the remainder of the aqueous initiator solution (over the course of 4 h) were supplied continuously to the polymerization vessel, beginning at the same time. After the end of the supply of the aqueous initiator solution, the polymerization vessel contained the aqueous dispersion of a first polymer whose composition was as follows: 63.2% by weight nBA,19.4% by weight EHA,14.6% by weight MMA, 2.1% by weight MAA,0.5% by weight AM, and 0.2% by weight IA. The glass transition temperature of the associated film was: Tg[1] = -29° C.

The aqueous dispersion of the polymer was cooled to 40° C, and 48 g of tBMA (5.8% by weight, based on all of the monomers polymerized) were added all at once. While maintaining the 40° C., the contents of the reactor were stirred for 10 minutes. Then, first of all, 3.2 g of a 50% strength by weight aqueous solution of tBHP were added all at once, followed by 0.8 g of RC dissolved in 5 g of water. Finally, the temperature of the reaction mixture was raised to 60.degree. C. and the reaction mixture was held at this temperature for 45 minutes with stirring (the heat of reaction given off inidicated that the polymerization was in progress). Finally, the reaction mixture was cooled to 25° C and the pH of the aqueous dispersion medium was adjusted to a value of 8.5 using 10% strength by weight aqueous NaOH solution. The solids content of the resulting aqueous polymer dispersion was 57% by weight and the mean polymer particle diameter, determined by means of photon correlation spectroscopy, was 480 nm.

Example 1: An aqueous monomer emulsion was produced from 240.5 g of water, 1% by weight aqueous solution of E1, 144 g of EHA, 468 g of nBA, 108 g of MMA, 16 g of MAA and 8 g of a 50% strength by weight aqueous solution of AM. An aqueous initiator solution was prepared from 2.4 g of sodium peroxodisulfate and 75 g of water. 250 g of water and 1.6 g of IA were charged to a stirred glass polymerization vessel (21). The polymerization vessel and the initial charge were flushed with nitrogen and then the charge was heated to 85° C. Subsequently, 20.55 g of the aqueous monomer emulsion and 7.7 g of the aqueous initiator solution were added all at once to the polymerization reactor. While maintaining the 85° C, the contents of the reactor were left to polymerize for 30 minutes. Then, while retaining the 85° C, the remainder of the aqueous monomer emulsion (over the course of 3 h) and the remainder of the aqueous initiator solution (over the course of 4 h) were supplied continuously to the polymerization vessel, beginning at the same time. After the end of the supply of the aqueous initiator solution, the polymerization vessel contained the aqueous dispersion of a first polymer whose composition was as follows: 63.1% by weight nBA,19.4% by weight EHA, 14.6% by weight MMA, 2.2% by weight MAA,0.5% by weight AM, and 0.2% by weight IA.

The aqueous dispersion of the polymer 1 was cooled to 40° C, and 80 g of tBMA (9.7% by weight, based on all of the monomers polymerized) were added all at once. While maintaining the 40° C, the contents of the reactor were stirred for 10 minutes. Then, first of all, 4.8 g of a 50% strength by weight aqueous solution of tBHP were added all at once, followed by 1.2 g of RC dissolved in 5 g of water. Finally, the temperature of the reaction mixture was raised to 60.degree. C. and the reaction mixture was held at this temperature for 45 minutes with stirring (the heat of reaction given off inidicated that the polymerization was in progress). Finally, the reaction mixture was cooled to 25° C and the pH of the aqueous dispersion medium was adjusted to a value of 8.2 using 10% strength by weight aqueous NaOH solution. The solids content of the resulting aqueous polymer dispersion was 56.2% by weight and the mean polymer particle diameter was 354 nm.

Example 2: An aqueous monomer emulsion was produced from 240.5 g of water, 1% by weight aqueous solution of E1, 144 g of EHA, 468 g of nBA, 108 g of MMA, 16 g of MAA and 8 g of a 50% strength by weight aqueous solution of AM. An aqueous initiator solution was prepared from 2.4 g of sodium peroxodisulfate and 75 g of water. 250 g of water and 1.6 g of IA were charged to a stirred glass polymerization vessel (2 1). The polymerization vessel and the initial charge were flushed with nitrogen and then the charge was heated to 85° C. Subsequently, 20.55 g of the aqueous monomer emulsion and 7.7 g of the aqueous initiator solution were added all at once to the polymerization reactor. While maintaining the 85° C, the contents of the reactor were left to polymerize for 30 minutes. Then, while retaining the 85° C, the remainder of the aqueous monomer emulsion (over the course of 3 h) and the remainder of the aqueous initiator solution (over the course of 4 h) were supplied continuously to the polymerization vessel, beginning at the same time. After the end of the supply of the aqueous initiator solution, the polymerization vessel contained the aqueous dispersion of a first polymer whose composition was as follows: 63.1% by weight nBA, 19.4% by weight EHA, 14.6% by weight MMA, 2.2% by weight MAA,0.5% by weight AM, and 0.2% by weight IA.

The aqueous dispersion of the polymer 1 was cooled to 40° C, and 100 g of an emulsion prepared by adding 80 g tBMA (9.7% by weight, based on all of the monomers polymerized) to a stirred solution of 20 g water and 0.8 g E1. While maintaining the 40° C, the contents of the reactor were stirred for 10 minutes. Then, first of all, 4.8 g of a 50% strength by weight aqueous solution of tBHP were added all at once, followed by 1.2 g of RC dissolved in 5 g of water. Finally, the temperature of the reaction mixture was raised to 60.degree. C. and the reaction mixture was held at this temperature for 45 minutes with stirring (the heat of reaction given off inidicated that the polymerization was in progress).

Finally, the reaction mixture was cooled to 25° C and the pH of the aqueous dispersion medium was adjusted to a value of 8.2 using 10% strength by weight aqueous NaOH solution. The solids content of the resulting aqueous polymer dispersion was 56.2% by weight and the mean polymer particle diameter was 354 nm.

Examples 3-5: Examples were carried out as in Example 1 with 1% by weight of different surfactant monomers E2-E4, respectively.

Examples 6-8: Examples were carried out as in Example 2 with 1% by weight of different surfactant monomers E2-E4, respectively.

Adhesion Testing

Polymers prepared in the preceding examples were tested for adhesion properties. The adhesives were then coated on acetone-wiped polyethylene terephthalate sheet and dried at 105° C for 5 minutes (or, where indicated, on untreated, biaxially-oriented polypropylene and dried at 70 C. for 15 min.). The thickness of the dried adhesive films was 0.001 inches. The coated sheets were then laminated to an untreated polypropylene cover sheet. The laminates were cut into 1-inch wide strips and conditioned for at least 24 hours at 25° C and 50% relative humidity prior to testing.
The laminate samples were visually inspected for clarity before and after water soaking and rated according to the following scale:

E=excellent film quality with complete clarity

VG=very good film quality with very slight haziness

G=good film quality with slight haziness

F=fair film quality with moderate haziness

P=poor film quality with severe haziness

The results are presented in Table I and show that the polymers of this invention show an equal or improved water resistance and water whitening resistance without adverse impact on adhesive properties as compared to conventional polymers (see comparative example).

Table I

| Example | Surfactant Monomer | WWR (Relative Ranking) | Water Resistance |
|---|---|---|---|
| 1 | E1 | G | E |
| 2 | E1 | G | E |
| 3 | E2 | VG | G |
| 4 | E3 | P | VG |
| 5 | E4 | P | E |
| 6 | E2 | VG | G |
| 7 | E3 | P | VG |
| 8 | E4 | P | E |
| Comparative | None | F | F |

The results show that the polymers of the present invention provides a good overall balance of adhesion properties. Examples had equal or improved shear resistance, better film clarity, comparable peel strength and loop tack, all with improved water resistance and water whitening resistance.

**Claims**

1. A process for preparing aqueous polymer dispersions comprising the steps: (a) polymerizing at least one ethylenically unsaturated monomer having one or more ethylenically unsaturated groups and at least one ethylenically unsaturated surfactant monomer by free-radical aqueous emulsion polymerization to provide a first polymer; and (b) further polymerizing, in one or more successive polymerization stages, one or more monomers selected from ethylenically unsaturated monomers and ethylenically unsaturated surfactant monomers by free-radical polymerization in aqueous dispersion of the first polymer;
wherein the difference in glass transition temperature between the first polymer and a corresponding polymer formed from each successive polymerization stage is greater than or equal to 10° C, the amount of the ethylenically unsaturated monomers polymerized to prepare the first polymer, based on the amount of all of the monomers polymerized in the process, is between 75% by weight and 99.9% by weight, the total amount of the ethylenically unsaturated monomers polymerized in all polymerization stages, based on the total amount of all of the monomers polymerized in the process, is between 0.1% by weight and 25% by weight.

2. The process according to claim 1 wherein the ethylenically unsaturated surfactant monomers are monomers that when added to water reduces the surface tension of water to less than 72 dynes/cm.

3. The process according to claim 1 wherein the ethylenically unsaturated monomers are selected from the group consisting of: ethyl acrylate, methyl (meth)acrylate, butyl(meth)acrylate, 2-ethylhexyl-acrylate, acrylic acid, methacrylic acid, (meth)acrylamide, styrene, itaconic acid, acrylonitrile, acryloamidopropane sulfonic acid and vinyl sufonic acid.

4. The process according to claim 1 wherein the glass transition temperature of the first polymer is from - 60 to 110° C.

5. The process according to claim 1 wherein the aqueous polymer dispersion prepared is used as an adhesive.

6. The process according to claim 1 wherein the aqueous polymer dispersion prepared is used as a pressure sensitive adhesive.

7. A process for preparing aqueous polymer dispersions comprising the steps: (a) polymerizing at least one ethylenically unsaturated monomer having one or more ethylenically unsaturated groups and at least one ethylenically unsaturated surfactant monomer by free-radical aqueous emulsion polymerization to provide a first polymer; and (b) further polymerizing, in one or more successive polymerization stages, one or more monomers selected from ethylenically unsaturated monomers by free-radical polymerization in aqueous dispersion of the first polymer;
wherein the difference in glass transition temperature between the first polymer and a corresponding polymer formed from each successive polymerization stage is greater than or equal to 10° C, the amount of the ethylenically unsaturated monomers polymerized to prepare the first polymer, based on the amount of all of the monomers polymerized in the process, is between 75% by weight and 99.9% by weight, the total amount of the ethylenically unsaturated monomers polymerized in all polymerization stages, based on the total amount of all of the monomers polymerized in the process, is between 0.1% by weight and 25% by weight.

8. A process for preparing aqueous polymer dispersions comprising the steps: (a) polymerizing at least one ethylenically unsaturated monomer having one or more ethylenically unsaturated groups by free-radical aqueous emulsion polymerization to provide a first polymer; and (b) further polymerizing, in one or more successive polymerization stages, one or more monomers selected from ethylenically unsaturated monomers and ethylenically unsaturated surfactant monomers by free-radical polymerization in aqueous dispersion of the first polymer;
wherein the difference in glass transition temperature between the first polymer and a corresponding polymer formed from each successive polymerization stage is greater than or equal to 10° C, the amount of the ethylenically unsaturated monomers polymerized to prepare the first polymer, based on the amount of all of the monomers polymerized in the process, is between 75% by weight and 99.9% by weight, the total amount of the ethylenically unsaturated monomers polymerized in all polymerization stages, based on the total amount of all of the monomers polymerized in the process, is between 0.1% by weight and 25% by weight.

**European Patent Office**

## EUROPEAN SEARCH REPORT

Application Number

EP 06 25 1970

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 306 982 B1 (LEE IVAN S. P ET AL) 23 October 2001 (2001-10-23) * column 2, line 53 - line 65; claims 1,4,7; example 1 * ----- | 1-8 | INV. C08F265/06 C09J151/00 |
| X | US 6 569 949 B1 (LEE IVAN S. P ET AL) 27 May 2003 (2003-05-27) * claims; table 1 * ----- | 1-8 | |
| X | EP 1 505 088 A (ROHM AND HAAS COMPANY) 9 February 2005 (2005-02-09) * paragraphs [0002], [0021]; claims * ----- | 1-8 | |
| X | EP 0 398 576 A (ROHM AND HAAS COMPANY) 22 November 1990 (1990-11-22) * example 55 * ----- | 1-8 | |
| X | US 2004/110891 A1 (GUO HAILAN ET AL) 10 June 2004 (2004-06-10) * example 1; tables 1.1,1.2,1.3 * ----- | 1-4,8 | |
| P,X | EP 1 541 648 A (BASF AKTIENGESELLSCHAFT) 15 June 2005 (2005-06-15) * claims; examples * ----- | 1-4,8 | TECHNICAL FIELDS SEARCHED (IPC) C08F C09J |
| P,X | WO 2005/063826 A (LG CHEM, LTD) 14 July 2005 (2005-07-14) * examples 1-10 * ----- | 1-4,8 | |

The present search report has been drawn up for all claims

| Place of search | Date of completion of the search | Examiner |
|---|---|---|
| Munich | 31 July 2006 | Wirth, M |

EPO FORM 1503 03.82 (P04C01)

## ANNEX TO THE EUROPEAN SEARCH REPORT
## ON EUROPEAN PATENT APPLICATION NO.

EP 06 25 1970

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2006

| Patent document cited in search report | | Publication date | Patent family member(s) | | Publication date |
|---|---|---|---|---|---|
| US 6306982 | B1 | 23-10-2001 | AU | 754107 B2 | 07-11-2002 |
| | | | AU | 8763798 A | 22-02-1999 |
| | | | BR | 9811587 A | 19-09-2000 |
| | | | CA | 2298529 A1 | 11-02-1999 |
| | | | EP | 1000100 A1 | 17-05-2000 |
| | | | JP | 2001512152 T | 21-08-2001 |
| | | | WO | 9906453 A1 | 11-02-1999 |
| US 6569949 | B1 | 27-05-2003 | AT | 282677 T | 15-12-2004 |
| | | | AU | 730909 B2 | 22-03-2001 |
| | | | CA | 2285406 A1 | 08-10-1998 |
| | | | DE | 69827613 D1 | 23-12-2004 |
| | | | DE | 69827613 T2 | 15-12-2005 |
| | | | EP | 0971994 A1 | 19-01-2000 |
| EP 1505088 | A | 09-02-2005 | AU | 2004203178 A1 | 17-02-2005 |
| | | | BR | 0402791 A | 24-05-2005 |
| | | | CN | 1576283 A | 09-02-2005 |
| EP 0398576 | A | 22-11-1990 | AT | 125826 T | 15-08-1995 |
| | | | AU | 631635 B2 | 03-12-1992 |
| | | | AU | 5497590 A | 15-11-1990 |
| | | | BR | 9002257 A | 30-07-1991 |
| | | | CA | 2015832 A1 | 15-11-1990 |
| | | | CN | 1047322 A | 28-11-1990 |
| | | | DE | 69021266 D1 | 07-09-1995 |
| | | | DE | 69021266 T2 | 04-01-1996 |
| | | | HK | 172495 A | 17-11-1995 |
| | | | JP | 2845570 B2 | 13-01-1999 |
| | | | JP | 3072511 A | 27-03-1991 |
| | | | MX | 171904 B | 22-11-1993 |
| | | | NO | 902063 A | 16-11-1990 |
| | | | NZ | 233653 A | 27-01-1993 |
| | | | PT | 94033 A | 08-01-1991 |
| | | | TR | 24993 A | 01-09-1992 |
| | | | ZA | 9003607 A | 30-01-1991 |
| US 2004110891 | A1 | 10-06-2004 | NONE | | |
| EP 1541648 | A | 15-06-2005 | NONE | | |
| WO 2005063826 | A | 14-07-2005 | US | 2005203247 A1 | 15-09-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6262144 B1
- US 20030149119 A
- US 5362832 A
- DE 4341260 A
- EP 421185 B
- EP 379892 B
- EP 609756 A
- DE 4334178 A
- DE 3902067 A

### Non-patent literature cited in the description

- **T. G. FOX.** *Bull. Am. Phys. Soc. (Ser. II,* 1956, vol. 1, 123
- **ULLMANNS.** Encyklopadie der technischen Chemie. Verlag Chemie, 1980, vol. 19, 18
- **ULLMANN'S.** Encyclopedia of Industrial Chemistry. VCH Weinheim, 1992, vol. A21, 169
- **J. BRANDRUP ; E. H. IMMERGUT.** Polymer Handbook. J. Wiley, 1966
- POLYMER HANDBOOK. J. Wiley, 1975
- POLYMER HANDBOOK. J. Wiley, 1989
- *Adhesive Age,* July 1987, 19-23
- *Polym. Mater. Sci. Eng.,* 1989, vol. 61, 588-592